# EUROPÄISCHE PATENTSCHRIFT

(11) **EP 3 211 767 B1**
(45) Veröffentlichungstag und Bekanntmachung des Hinweises auf die Patenterteilung: **03.05.2023**
(21) Anmeldenummer: 16157646.7
(22) Anmeldetag: 26.02.2016
(51) Int. Cl.: H02K 5/20, H02K 16/04

(54) **ELEKTRISCHE MASCHINE MIT GLOCKENLÄUFER**
ELECTRIC MACHINE WITH BELL-SHAPED ROTOR
MACHINE ELECTRIQUE COMPRENANT UN INDUIT EN CLOCHE

(43) Veröffentlichungstag der Anmeldung: 30.08.2017
(73) Patentinhaber: Siemens Aktiengesellschaft, 80333 München (DE)
(72) Erfinder: Huter, Eric, 97616 Bad Neustadt a. d. Saale (DE); Schmitt, Daniel, 97708 Bad Bocklet (DE); Seufert, Reiner, 97616 Salz (DE); Steger, Peter, 97464 Niederwerrn (DE); Vollmer, Rolf, 36129 Gersfeld (DE)
(74) Vertreter: Siemens Patent Attorneys

(56) Entgegenhaltungen:
- EP-A1- 2 928 052
- EP-A2- 1 612 415
- DE-A1-102005 058 031
- DE-A1-102009 038 691
- DE-A1-102009 051 881
- DE-A1-102011 084 038
- DE-A1-102012 022 453
- JP-A- H09 308 183
- JP-A- 2013 179 745
- US-A- 3 735 174
- US-A1- 2015 035 392
- US-A1- 2015 285 502

## Beschreibung

Die Erfindung betrifft eine elektrische Maschine nach dem Oberbegriff des Anspruchs 1. Eine solche elektrische Maschine ist beispielsweise aus der US 3 735 174 A1 bekannt.

Aus der EP 2 928 052 A1 ist eine elektrische Maschine mit einem Außenstator, einem Innenstator, der konzentrisch zu dem Außenstator innerhalb des Außenstators angeordnet ist bekannt. Diese elektrische Maschine weist einen Rotor auf, der konzentrisch zu dem Außenstator und dem Innenstator zwischen dem Außenstator und dem Innenstator angeordnet ist und der relativ zum Außenstator und zum Innenstator bewegbar ist.

Eine derartige elektrische Maschine ist als Synchronmaschinen, insbesondere als Drehstromsynchronmaschinen, ausführbar. Derartige Drehstromsynchronmaschinen können beispielsweise als Motor oder auch als Generator betrieben werden. Bei permanenterregten Drehstromsynchronmaschinen sind auf dem Rotor bzw. dem Läufer Permanentmagnete angeordnet.

Aus der DE 10 2005 058 031 A1 ist eine elektrische Maschine mit einem Kühlmantel bekannt. Um die Kühlung der elektrischen Maschine zu verbessern, wird eine elektrische Maschine mit einem Stator und einem Rotor vorgeschlagen, wobei der Stator einen Kühlmantel über zumindest einem Teil des Stators aufweist, wobei der Kühlmantel einen den Stator umfassenden Motormantel und einen davon zumindest abschnittsweise beabstandeten Außenmantel aufweist und in dem Abschnitt zwischen Motormantel und Außenmantel eine hohle Wendel angeordnet ist, die eine vorgebbare Steigung aufweist, und wobei Einlass und Auslass dieses Kühlmantels sich im Wesentlichen auf einer axialen Ebene der elektrischen Maschine befinden.

Eine Aufgabe der Erfindung ist es, eine elektrische Maschine der eingangs genannten Art anzugeben, welche kompakt aufgebaut ist, bzw. einfach zu fertigen ist.

Eine Lösung der Aufgabe gelingt durch eine elektrische Maschine mit den Merkmalen nach Anspruch 1. Ausgestaltungen der vorliegenden Erfindung ergeben sich gemäß der Ansprüche 2 bis 4.

Eine elektrische Maschine weist einen Außenstator und einen Innenstator auf, der konzentrisch zu dem Außenstator innerhalb des Außenstators angeordnet ist. Die elektrische Maschine weist auch einen Läufer, insbesondere einen Glockenläufer auf, der konzentrisch zu dem Außenstator und dem Innenstator zwischen dem Außenstator und dem Innenstator angeordnet ist. Der Läufer ist relativ zum Außenstator und zum Innenstator bewegbar. Die elektrische Maschine weist auch eine Welle, eine erste Kühleinrichtung zum Kühlen des Innenstators und eine zweite Kühleinrichtung zum Kühlen des Außenstators auf, wobei die erste Kühleinrichtung erfindungsgemäss einen wendelförmigen Kühlkanal aufweist, wobei die erste Kühleinrichtung insbesondere eine bifilare Form aufweist.

Die zweite Kühleinrichtung weist ebenfalls einen wendelförmigen Kühlkanal und eine bifilare Form auf. Ein wendelförmiger Kühlkanal ermöglicht eine kompakte Bauweise. Hierzu dient auch die bifilare Form. Bei der bifilaren Form befinden sich ein Zulaufkanal und ein Rücklaufkanal insbesondere nebeneinander. Mittels des Zulaufkanal ergibt sich eine Hinleitung des Kühlmediums und Mittels des Rücklaufkanals ergibt sich eine Rückleitung des Kühlmediums.

Die erste Kühleinrichtung ist mit der zweiten Kühleinrichtung verbunden und weisen einen gemeinsamen Einlass und/oder einen gemeinsamen Auslass auf, was eine kompakte Bauweise ermöglicht und der Anschluss der Kühlung der elektrischen Maschine an ein Kühlmedium vereinfachen lässt. Das Kühlmedium ist beispielsweise Wasser.

Die erste Kühleinrichtung ist zum Kühlen des Innenstators vorgesehen. Somit kann die im Betrieb der elektrischen Maschine entstehende Wärme von den Permanentmagneten des Innenstators abgeführt werden. Auf diese Weise kann verhindert werden, dass die Permanentmagneten durch zu hohe Temperaturen entmagnetisiert werden. Somit können Magnete mit einer geringeren Koerzitivfeldstärke eingesetzt werden. Dies bedeutet wiederum, dass Permanentmagneten mit einem geringeren Anteil an Seltenen Erden verwendet werden können. Auf diese Weise kann die Remanenz erhöht und die Kosten reduziert werden.

Die zweite Kühleinrichtung ist zur Kühlung des Außenstators vorgesehen. Durch die zweite Kühleinrichtung kann verhindert werden, dass die Wicklungen des Außenstators im Betrieb der elektrischen Maschine überhitzt und somit gegebenenfalls beschädigt werden. Auch auf diese Weise kann ein zuverlässiger Betrieb der elektrischen Maschine ermöglicht werden.

Der Außenstator weist ein äußeres Gehäuse auf, und der Innenstator weist ein inneres Gehäuse auf, wobei das äußere Gehäuse und das innere Gehäuse gemeinsam ein topfförmiges Gehäuse ausbilden, wobei das topfförmige Gehäuse erfindungsgemäß einteilig ausgeführt ist.

Zur Versteifung des Gehäuses sind erfindungsgemäß Gehäuseversteifungen vorgesehen. Damit weist es eine ausreichende Biegesteifigkeit und/oder Pressung auf.

Das topfförmige Gehäuse (Topfgehäuse) ist beispielsweise aus Metall, Glas, Keramik, und/oder einem faserverstärktem Kunststoff. Das topfförmige Gehäuse weist in einer schematischen Betrachtung zwei konzentrisch angeordnete Hohlzylinder auf, welche auf einer Seite der elektrischen Maschine, beispielsweise auf einer Abtriebsseite (AS) miteinander verbunden sind. Die Verbindung über ein Verbindungselement gelingt beispielsweise mittels Stegen oder mittels einer Art Bodenplatte, welche eine konzentrische Aussparung hat, die mit der Öffnung des inneren Hohlzylinders übereinstimmt. Durch die einteilige Ausgestaltung des Gehäuses der elektrischen Maschine wird die Anzahl an Einzelteilen, welche für die elektrische Maschine benötigt werden, reduziert. Durch das Topfgehäuse sind ein Aussenstatorblechpaket und ein Innenstatorblechpaket konzentrisch positionierbar. Das Gehäuse nimmt zwei Statoren auf und kann deshalb auch als Doppelstatorgehäuse bezeichnet werden. Das Gehäuse der elektrischen Maschine ermöglicht auch den Sitz der Lagerung. Darüber hinaus kann das Gehäuse einen Anbau an Kundenflansche ermöglichen. Hierfür sind z.B. Befestigungselemente vorgesehen. Das Gehäuse kann dünnwandig ausgeführt sein, um eine leichte und/oder kleine Bauweise zu ermöglichen.

Ist der Läufer der elektrischen Maschine mit den zwei Statoren ein Glockenläufer, so kann dieser über das Gehäuse gelagert werden.

Bei der elektrischen Maschine kann vorgesehen sein, dass der

Außenstator insbesondere eine Mehrzahl von Wicklungen aufweist, der Innenstator beispielsweise eine Mehrzahl von Permanentmagneten aufweist und der Läufer z.B. ein Trägerelement umfasst, das aus einem amagnetischen Material gebildet ist und das eine Mehrzahl von Aussparungen aufweist, in denen jeweils ein weichmagnetisches Segment angeordnet ist. Somit kann eine permanenterregte Drehstromsynchronmaschine bereitgestellt werden, bei der die Permanentmagneten an dem Innenstator angeordnet sind und somit im Betrieb der elektrischen Maschine nicht bewegt werden. Die elektrische Maschine ist insbesondere als Drehstromsynchronmaschine ausgebildet und kann als Motor oder als Generator verwendet werden. Die elektrische Maschine umfasst insbesondere einen Außenstator, der mehrere Wicklungen aufweist. Zu diesem Zweck kann der Außenstator entsprechende Nuten aufweisen, in denen die Wicklungen angeordnet sind. Innerhalb des Außenstators ist der Läufer angeordnet, der beispielsweise mit einer Welle drehfest verbunden sein kann.

Als Kühlmedium für die Kühleinrichtungen kann z.B. eine Kühlflüssigkeit wie Wasser oder ein Wasser-Glykol-Gemisch verwendet werden.

In einer Ausgestaltung der elektrischen Maschine sind die Permanentmagnete des Innenstators aus einem Ferrit gebildet. Die Verwendung eines Ferrits hat den Vorteil, dass kostengünstige Permanentmagneten für den Innenstator verwendet werden können.

In einer weiteren Ausgestaltung der elektrischen Maschine enthalten die Permanentmagenete des Innenstators Eisen-Neodym-Bor. Derartige Permanentmagneten des Innenstators, die Eisen, Neodym und/oder Bor aufweisen, zeichnen sich durch eine hohe Temperaturbeständigkeit aus.

Der Außenstator weist insbesondere ein Blechpaket auf, das eine Mehrzahl von Zähnen mit dazwischenliegenden Nuten aufweist. In die Nuten sind entsprechende Wicklungen eingebracht. Die Wicklungen sind üblicherweise mit einem Drehstromnetz bzw. einem Wechselrichter elektrisch verbunden. Eine elektrische Maschine mit zwei Statoren kann auch als eine Doppelstatormaschine bezeichnet werden. Durch die zwei Kühleinrichtungen für Außenstator und Innenstator kann für beide Statoren eine effiziente Kühlung vorgesehen werden. Für ein Gehäuse der Doppelstatormaschine können zwei Anschlüsse für Kühlflüssigkeit vorgesehen sein, so dass es möglich ist den Innenstator und den Außenstator gut zu kühlen.

In einer Ausgestaltung der elektrischen Maschine, ist der Läufer also z.B. ein Glockenläufer, wobei der Glockenläufer mit der Welle verbunden ist, wobei der Glockenläufer über die Welle gelagert ist. Der Glockenläufer weist eine Öffnung auf, die Glockenläuferöffnung. Diese Öffnung entspricht der Seite des Glockenmundes einer Glocke. Der Glockenläufer weist auch eine Art Boden auf, den Glockenläuferboden. Dieser Glockenläuferboden entspricht der Seite der Platte einer Glocke.

In einer Ausgestaltung der elektrischen Maschine weist der Glockenläufer eine Innenwelle auf. Die Welle ist beispielsweise über ein erstes Lager und über ein zweites Lagers gelagert. Beide Lager können sich innerhalb der elektrischen Maschine befinden. Das erste Lager ist beispielsweise auf einer Seite des Glockenläuferbodens und das zweite Lager ist auf einer Seite der Glockenläuferöffnung angeordnet ist. Die Lager können sich beispielsweise am inneren Gehäuse abstützen. In einer Ausgestaltung der elektrischen Maschine umfassen der Außenstator, der Innenstator und der Läufer gemeinsam einen Raum, wobei sich die Welle der elektrischen Maschine auch in diesen Raum erstreckt. So kann beispielsweise die Welle der elektrischen Maschine durch diese hindurch geführt werden. So können beide Seiten (Stirnseiten) der elektrischen Maschine als Abtriebsseite genutzt werden.

In einer Ausgestaltung der elektrischen Maschine ist der Läufer mit einer Welle verbunden, wobei diese als Hohlwelle ausgebildet ist. Insbesondere für den Fall, dass die elektrische Maschine für eine Werkzeugmaschine verwendet wird, kann durch die Verwendung einer Hohlwelle eine flexible Ausgestaltung der Werkzeugmaschine ermöglicht werden.

Das äußere Gehäuse und/oder das innere Gehäuse können beispielsweise mit einem wendelförmigen Kühlkanal gedruckt werden (3D-Druck). Durch das Druckverfahren kann der wendelförmige Kühlkanal in einem einteiligen Körper einfach realisiert werden.

Auch ein bifilarer wendelförmiger Kühlkanal kann auf diese Weise gedruckt werden. Auch dieser lässt sich einfach durch einen 3D-Druck in einem einteiligen Körper realisieren.

Es kann zum Druck (3D-Druck) ein Metall, ein Kunststoff, eine Keramik und/oder eine Kombination daraus verwendet werden.

Somit kann die benötigte Materialeigenschaft eingestellt werden.

Die Erfindung wird anhand von Zeichnungen beispielhaft bzw. schematisch erläutert. Dabei zeigen:
- FIG 1: ein Gehäuse einer elektrischen Maschine mit einer Kühlung;
- FIG 2: einen Querschnitt durch das Gehäuse der elektrischen Maschine;
- FIG 3: einen Querschnitt durch die elektrische Maschine;
- FIG 4: einen Glockenläufer der elektrischen Maschine;
- FIG 5: das Gehäuse der elektrischen Maschine mit der Sicht auf ein Verbindungselement zwischen einem äußeren Gehäuse und einem inneren Gehäuse;
- FIG 6: das Gehäuse der elektrischen Maschine mit der Sicht in einen Aufnahmeraum für den Glockenläufer; und
- FIG 7: das Gehäuse der elektrischen Maschine mit der Sicht entlang der Rotationsachse.

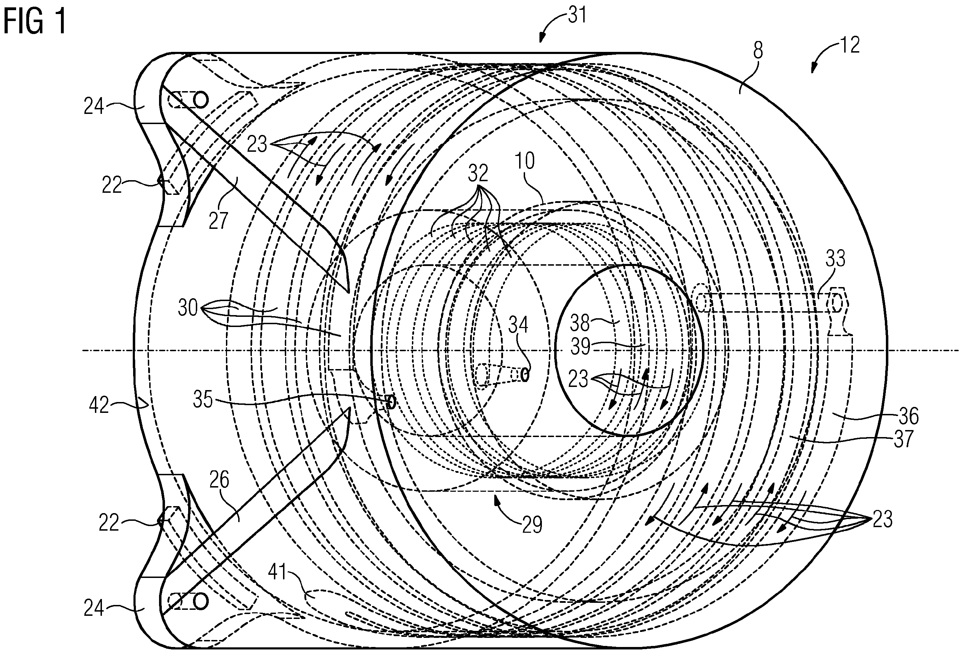

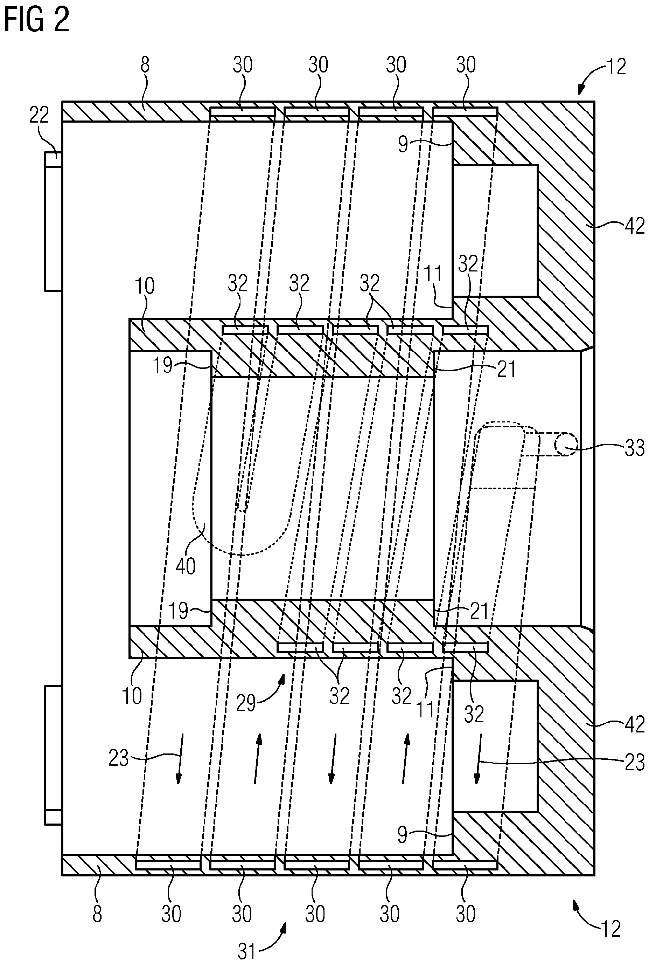

Die Darstellung nach FIG 1 zeigt in einer perspektivischen Darstellung ein Gehäuse 12 einer elektrischen Maschine. Das Gehäuse 12 weist ein äußeres Gehäuse 8 und ein inneres Gehäuse 10 auf. Das äußere Gehäuse 8 dient der Aufnahme eines Au-ßenstators. Das innere Gehäuse 10 dient der Aufnahme eines Innenstators. Das innere Gehäuse 10 ist mit dem äußeren Gehäuse 8 über ein Verbindungselement 42 verbunden. Durch diese Verbindung 42, welche eine Art Boden eines topfförmigen Gehäuses mit mittigem Hohlzylinder darstellt, ergibt sich ein einteiliges Gehäuse 12 für den Außenstator und den Innenstator, das Doppelstatorgehäuse 12. Das Doppelstatorgehäuse 12 weist Kühlkanäle 30 und 32 auf, welche in FIG 1 gestrichelt dargestellt sind. Obgleich die Kühlkanäle 30 und 32 eine dreidimensionale Ausprägung haben, sind sie in der perspektivischen Darstellung von FIG 1 nur als zweidimensionale Struktur dargestellt um die FIG 1 nicht zu überfrachten und eine einfachere Lesbarkeit der FIG 1 zu gewährleisten. Im inneren Gehäuse 10 ist ein innerer wendelförmiger Kühlkanal 32 zur Ausbildung einer ersten Kühleinrichung 29 integriert. Der innere wendelförmige Kühlkanal 32 ist bifilar ausgeführt. Er weist eine innere Hinleitung 38 auf und eine innere Rückleitung 39. Die innere Hinleitung 38 führt zu einer inneren Wende 40, welche in FIG 2 dargestellt ist. Durch die innere Wende 40 wird das Kühlmedium umgelenkt und in die entgegengesetzte Richtung geleitet. Pfeile 23 geben die Flußrichtung des Kühlmediums an und zeigen den bifilaren Aufbau des wendelförmigen inneren Kühlkanals 32. Der bifilare Aufbau bewirkt, dass nebeneinander liegende Kühlkanäle in unterschiedlichen Richtungen mit Kühlmedium durchströmt sind.

Im äußeren Gehäuse 8 ist ein äußerer wendelförmiger Kühlkanal 30 zur Ausbildung einer zweiten Kühleinrichung 31 integriert. Der äußere wendelförmige Kühlkanal 30 ist bifilar ausgeführt. Er weist eine äußere Hinleitung 36 auf und eine äußere Rückleitung 37. Die äußere Hinleitung 36 führt zu einer äußeren Wende 41. Durch die äußere Wende 41 wird das Kühlmedium umgelenkt und in die entgegengesetzte Richtung geleitet. Pfeile 23 geben die Flußrichtung des Kühlmediums an und zeigen den bifilaren Aufbau des wendelförmigen äußeren Kühlkanals 30. Der bifilare Aufbau bewirkt, dass nebeneinander liegende Kühlkanäle in unterschiedlichen Richtungen mit Kühlmedium durchströmt sind, was durch die Pfeile 23 angezeigt ist. Der innere wendelförmige Kühlkanal 32 ist mit dem äußeren wendelförmigen Kühlkanal 30 über eine Umleitung 33 verbunden. Zur Einleitung eines Kühlmediums ist ein Kühleinlaß 34 vorgesehen. Zur Ausleitung eines Kühlmediums ist ein Kühlauslaß 35 vorgesehen.

Das Gehäuse 12 weist vier Befestigungselemente auf, von denen zwei Befestigungselemente 24 in der FIG 1 dargestellt sind. Die Befestigungselemente 24 befinden sich am äußeren Gehäuse 8 und sind zum Anbau an einen Kundenflansch vorgesehen. Der Kundenflansch ist ein Flansch der für die Anbringung der elektrischen Maschine vorgesehen ist. Zur Versteifung des Gehäuses 12 sind Gehäuseversteifungen 26, 27 vorgesehen, von denen in der FIG 1 zwei Gehäuseversteifungen 26, 27 dargestellt sind. Die Gehäuseversteifungen 26, 27 sind in den Diagonalen, die das Kantenmaß vorteilhaft nicht überschreiten. Das Gehäuse 12 weist auch zumindest ein Zentrierelement 22 auf. Zentrierelemente 22 ermöglichen eine zur Welle konzentrische Montage des Stators am Kundenflansch.

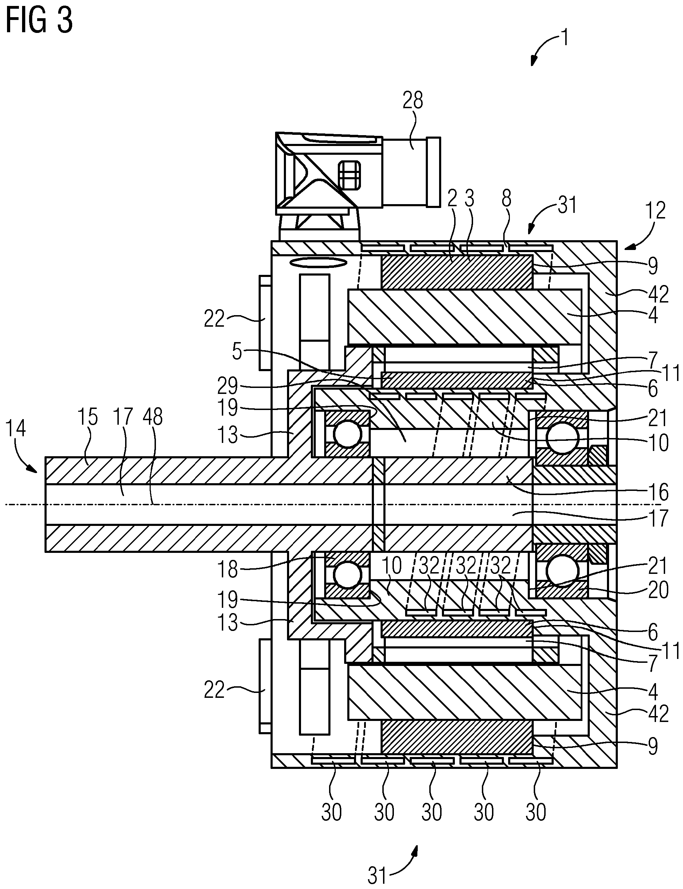

Die Darstellung nach FIG 2 zeigt das Gehäuse 12 der elektrischen Maschine nach FIG 1 in einer Schnittdarstellung. Die in FIG 2 verwendeten Bezugszeichen betreffen die gleichen Elemente wie in FIG 1 und deren Beschreibung. Dies betrifft in gleicher Weise auch die FIG 3. Der Schnitt nach FIG 2 ist ein Längsschnitt entlang einer Rotationsachse der elektrischen Maschine. Die elektrische Maschine weist einen Außenstator 2 und einen Innenstator 5 auf, welche in FIG 3 dargestellt sind. Das äußere Gehäuse 8 bildet eine Art äußeres Rohr aus und das innere Gehäuse 10 eine Art inneres Rohr. Das äußere Gehäuse 8 ist mechanisch mit dem inneren Gehäuse 10 über ein Verbindungselement 42 verbunden. Das äußere Gehäuse 8, das innere Gehäuse 10 und das Verbindungselement 42 bilden ein einteiliges Doppelstatorgehäuse 12. Sowohl das äußere Gehäuse 8 wie auch das innere Gehäuse 10 haben Hohlräume 30, 32 innerhalb der Gehäusewände (Rohrwände) zur Leitung eines Kühlmediums, insbesondere zur Leitung von Kühlflüssigkeit. Die Hohlräume 30, 32 sind so aufgebaut und miteinander verbunden, dass durch einen Einlass Kühlflüssigkeit einströmen kann und durch einen Auslass ausströmen kann. Die Hohlräume 30, 32 entsprechen vorzugsweise einer bifilaren Wendel. Der Hohlraum 30 ist der äußere wendelförmige Kühlkanal und der Hohlraum 32 ist der innere wendelförmige Kühlkanal. Vorzugsweise sind die Wendeln im Außenrohr 8 und im Innenrohr 10 hintereinander verbunden. Alternativ können sie auch parallel verbunden sein, was in der FIG 2 jedoch nicht dargestellt ist. Das Gehäuse 12 wird beispielsweise im Additive Manufacturing Verfahren hergestellt. Die Innenseite des Außenrohres 8 dient der Aufnahme eines Ständerblechpaketes der elektrischen Maschine. Die Außenseite des Innenrohres dient z.B. der Aufnahme eines Blechpaketes mit Magneten. Beide Sitze werden beispielsweise in einer Aufspannung bearbeitet, so dass sie zueinander sehr genau konzentrisch sind. Die Innenseite des Innenrohres 10 dient der Aufnahme von Lagern (z.B. Kugellager oder Tonnenlager). Zur Positionierung eines Antriebsseitigen Lagers, also eines Lagers auf der Seite auf der der Glockenläufer der elektrischen Maschine mit der Welle verbunden ist, ist eine Schulter 19 für den antriebsseitigen Lagersitz vorgesehen. Zur Positionierung eines bedienseitigen Lagers, also eines Lagers auf der Seite auf der der Glockenläufer der elektrischen Maschine offen ist, ist eine Schulter 21 für den bedienseitigen Lagersitz vorgesehen.

Zur Positionierung eines Außenstatorblechpaketes bzw. eines Außenstators ist eine äußere Anlageschulter 9 vorgesehen. Zur Positionierung eines Innenstators ist eine innere Anlageschulter 11 vorgesehen.

Nach der FIG 2 weist das äußere Gehäuse 8 einen äußeren wendelförmigen Kühlkanal 30 auf und das innere Gehäuse 10 einen inneren wendelförmigen Kühlkanal 32. Eine mögliche Flußrichtung eines Kühlmediums ist durch Pfeile 23 angezeigt. Der innere wendelförmige Kühlkanal 32 weist eine innere Wende 40 zur Umkehrung der Kühlflüssigkeit auf. Der innere wendelförmige Kühlkanal 32 ist mit dem äußeren wendelförmigen Kühlkanal 30 über eine Umleitung 33 verbunden.

Die Darstellung nach FIG 3 zeigt eine Schnittdarstellung einer elektrischen Maschine 1 mit einem Gehäuse 12 nach den FIG 1 bzw. 2. Gleiche Elemente sind hier wieder mit den gleichen Bezugszeichen versehen. Der Schnitt ist ein Längsschnitt entlang einer Rotationsachse 48 eines Glockenläufers 13 der elektrischen Maschine 1. Der Glockenläufer 13 ist mit einer Welle 14 mechanisch verbunden. Die Welle 14 weist zumindest zwei Abschnitte auf, eine Außenwelle 15 als einen ersten Abschnitt und eine Innenwelle 16 als einen zweiten Abschnitt. Die Innenwelle 16 befindet sich im von der elektrischen Maschine 1 eingenommenen Raum. Die Welle 14 weist einen Hohlraum 17 auf und stellt damit eine Hohlwelle dar. Die Welle 14 ist über ein erstes Lager 18 und ein zweites Lager 20 gelagert. Zur Positionierung des ersten Lagers 18 auf der Antriebsseite dient die Schulter 19 für den antriebsseitigen Lagersitz. Zur Positionierung des zweiten Lagers 20 auf der Bedienseite dient die Schulter 21 für den bedienseitigen Lagersitz.

Die elektrische Maschine 1 weist einen Außenstator 2 und einen Innenstator 5 auf. Der Außenstator 2 weist ein Außenstatorblechpaket 3 und eine Außenstatorwicklung 4 auf. Das Außenstatorblechpaket 4 liegt an der äußeren Anlageschulter 9 an. Der Innenstator 5 weist ein Innenstatorblechpaket 6 und Innenstatormagnete 7 auf. Das Innenstatorblechpaket 6 liegt an der inneren Anlageschulter 11 an.

Für die Bestromung der Außenstatorwicklung 4 ist ein elektrischer Anschluß 28 vorgesehen.

Durch die Topfform des Gehäuses 12, welche sich durch die Verbindung von äußerem Gehäuse 8 und innerem Gehäuse 10 ergibt, können im Vergleich mehrere Bauteile ersetzt werden. Mit der Topfform des Gehäuses 12 können auch Montageschritte eingespart werden. Die Toleranzkette wird reduziert und damit werden kleinere Luftspalte und eine bessere Konzentrizität zwischen rotierenden und stehenden Teilen möglich. Das erhöht die Kompaktheit und senkt die Drehmomentwelligkeit. Lediglich zwei Anschlüsse für die Flüssigkeitskühlung (siehe Bezugszeichen 34 und 35 in FIG 1 bzw. FIG 2) reduzieren den Aufwand für die Anschlusstechnik. Die bifilare Kühlwendel 30, 32 ermöglicht eine homogene Temperaturverteilung und eine effiziente Wärmeabfuhr. Der Glockenläufer 13 mit Innenwelle hat ein kleines Trägheitsmoment und kann kostengünstig gelagert werden.

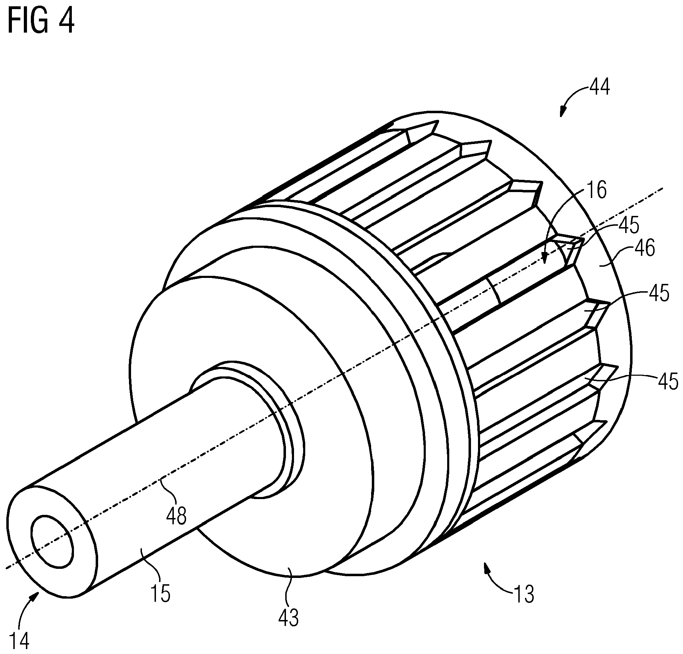

Die Darstellung nach FIG 4 zeigt den Glockenläufer 13. Der Glockenläufer 13 stützt sich auf der Welle 14 ab. Über diese Welle 14 ist der Glockenläufer 13 gelagert, wobei sich die Lager an der inneren Welle 16 abstützen. Der Glockenläufer 13 weist einen Glockenläuferboden 43 und eine Glockenläuferöffnung 44 auf. Der Glockenläufer 13 endet in Bereich seiner Öffnung mit einem Abschlußring 46. Zwischen dem Abschlußring 46 und dem Glockenläuferboden 43 befinden sich Stäbe 45 insbesondere aus weichmagnetischem Material. Die Stäbe 45 sind voneinander beabstandet und weisen ein achsparallele Ausrichtung auf.

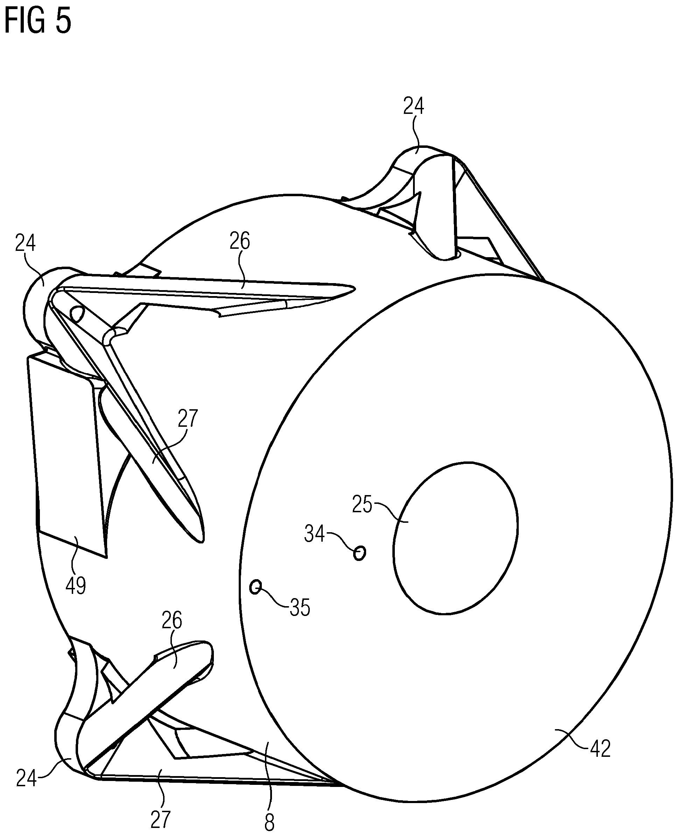

Die Darstellung nach FIG 5 zeigt das Gehäuse der elektrischen Maschine mit der Sicht auf das Verbindungselement 42 zwischen dem äußeren Gehäuse 8 und dem inneren Gehäuse. Gezeigt sind ferner drei Befestigungselemente 24, welche beispielsweise zur Befestigung an ein Getriebe dienen. Durch das Loch 25 kann eine Welle geführt sein. An den Befestigungselementen 24 setzen Gehäuseversteifungen 26 und 27 an, welche jeweils eine V-Form ausbilden. Auf der Seite des Verbindungselementes 42 befindet sich ein Kühleinlaß 34 und ein Kühlauslaß 35. Ein elektrischer Anschluss der elektrischen Maschine kann über den elektrischen Anschlußbereich 49 erfolgen. Das Doppelstatorgehäuse ist beispielsweise zumindest bezüglich des äußeren Gehäuses 8, des Verbindungselementes 42 und des inneren Gehäuses einteilig ausgeführt.

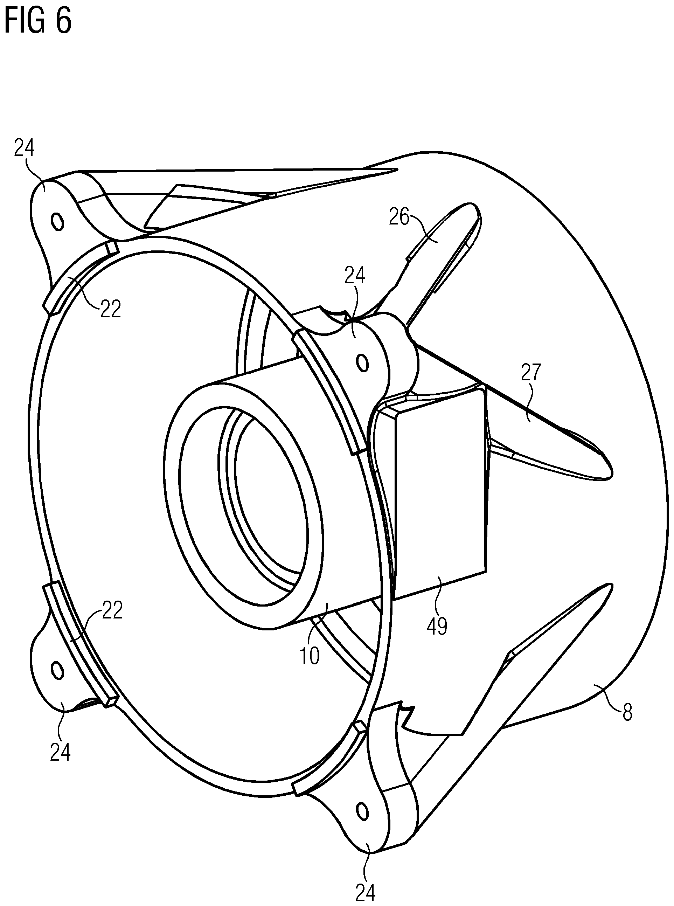

Die Darstellung nach FIG 6 zeigt das Gehäuse nach FIG 5 aus einer anderen Perspektive. Die Darstellung nach FIG 6 zeigt das Gehäuse mit einer Sicht in einen Aufnahmeraum für den Glockenläufer, welcher in FIG 4 dargestellt ist. Im Vergleich zu FIG 5 zeigt FIG 6 auch vier Zentrierelemente 22 zur sicheren Positionierung und/oder Montage des Gehäuses, bzw. der elektrischen Maschine. Durch die Sicht in den Aufnahmeraum für den Glockenläufer ist neben dem äußeren Gehäuse 8 auch das innere Gehäuse 10 deutlich ersichtlich.

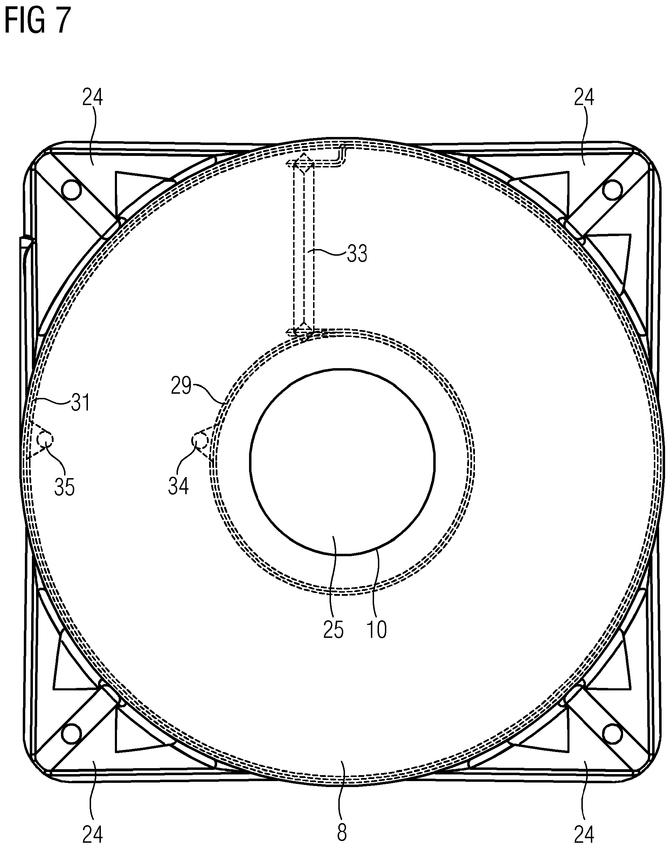

Die Darstellung nach FIG 7 zeigt das bereits in FIG 5 und FIG 6 dargestellte Gehäuse aus einer weiteren Ansicht. Die Ansicht nach FIG 7 orientiert sich an der Rotationsachse für den Glockenläufer. Neben dem Kühleinlaß 34 für Kühlflüssigkeit und dem Kühlauslaß 35 für die Kühlflüssigkeit ist auch die Positionierung der ersten Kühleinrichtung 29 und der zweiten Kühleinrichtung 31 gezeigt. Die erste Kühleinrichtung 29 weist Kühlkanäle auf, welche durch kreisförmige gestrichelte Linien symbolisiert werden. Auch die zweite Kühleinrichtung 31 weist Kühlkanäle auf, welche auch durch kreisförmige gestrichelte Linien symbolisiert werden. Die erste Kühleinrichtung 29 im inneren Gehäuse 10 und die zweite Kühleinrichtung 31 im äußeren Gehäuse 8 sind durch eine Umleitung 33 miteinander verbunden bzw. gekoppelt. Es ist auch möglich auf die Kopplung zu verzichten und sowohl für die erste Kühleinrichtung wie auch für die zweite Kühleinrichtung separate Kühleinlässe und Kühlauslässe vorzusehen. Dies ist in FIG 7 jedoch nicht dargestellt.

## Patentansprüche

1. Elektrische Maschine (1) mit
- einem Außenstator (2),
- einem Innenstator (5), der konzentrisch zu dem Außenstator (2) innerhalb des Außenstators (2) angeordnet ist,
- einem Läufer (13), der konzentrisch zu dem Außenstator (2) und dem Innenstator (5) zwischen dem Außenstator (2) und dem Innenstator (5) angeordnet ist und der relativ zum Au-ßenstator (2) und zum Innenstator (5) bewegbar ist, und
- einer Welle (14),
- einer ersten Kühleinrichtung (29) zum Kühlen des Innenstators (5),
- einer zweiten Kühleinrichtung (31) zum Kühlen des Außenstators (2),
wobei die zweite Kühleinrichtung (31) einen wendelförmigen Kühlkanal (30) aufweist, wobei die zweite Kühleinrichtung (31) eine bifilare Form aufweist,
wobei der Außenstator (2) ein äußeres Gehäuse (8) aufweist und der Innenstator (5) ein inneres Gehäuse (10) aufweist, wobei das äußere Gehäuse (8) und das innere Gehäuse (10) gemeinsam ein topfförmiges Gehäuse ausbilden,
**dadurch gekennzeichnet,**
**dass** die erste Kühleinrichtung (29) mit der zweiten Kühleinrichtung (31) verbunden ist, wobei die erste Kühleinrichtung (29) und die zweite Kühleinrichtung (31) einen gemeinsamen Einlass (34) und/oder einen gemeinsamen Auslass (35) haben,
**dass** die erste Kühleinrichtung (29) einen wendelförmigen Kühlkanal (32) aufweist, wobei die erste Kühleinrichtung (29) eine bifilare Form aufweist und
das topfförmige Gehäuse (12) einteilig ausgeführt ist, wobei zur Versteifung des Gehäuses (12) Gehäuseversteifungen (26,27) vorgesehen sind.

2. Elektrische Maschine (1) nach Anspruch 1,
**dadurch gekennzeichnet, dass** der Läufer (13) ein Glockenläufer ist, wobei der Glockenläufer (13) mit der Welle (14) verbunden ist, wobei der Glockenläufer (13) über die Welle (14) gelagert ist.

3. Elektrische Maschine (1) nach Anspruch 2,
**dadurch gekennzeichnet, dass** der Glockenläufer (13) eine Innenwelle (16) aufweist.

4. Elektrische Maschine nach einem der Ansprüche 1 bis 3, wobei das Gehäuse, insbesondere vier, Befestigungselemente (24) aufweist,
wobei die Gehäuseversteifungen (26,27) an den Befestigungselementen (24) ansetzen und jeweils eine V-Form ausbilden.

## Claims

1. Electric machine (1) with
- an outer stator (2),
- an inner stator (5), which is arranged concentrically with the outer stator (2) within the outer stator (2),
- a rotor (13), which is arranged concentrically with the outer stator (2) and the inner stator (5) between the outer stator (2) and the inner stator (5) and which can be moved relative to the outer stator (2) and the inner stator (5), and
- a shaft (14),
- a first cooling facility (29) for cooling the inner stator (5),
- a second cooling facility (31) for cooling the outer stator (2),
wherein the second cooling facility (31) has a helical cooling channel (30), wherein the second cooling facility (31) has a bifilar shape,
wherein the outer stator (2) has an outer housing (8) and the inner stator (5) has an inner housing (10), wherein the outer housing (8) and the inner housing (10) together embody a pot-shaped housing,
**characterised in that**
the first cooling facility (29) is connected to the second cooling facility (31), wherein the first cooling facility (29) and the second cooling facility (31) have a shared inlet (34) and/or a shared outlet (35),
the first cooling facility (29) has a helical cooling duct (32), wherein the first cooling facility (29) has a bifilar shape and
the pot-shaped housing (12) is designed in one piece, wherein housing braces (26, 27) are provided for reinforcing the housing (12).

2. Electric machine (1) according to claim 1,
**characterised in that** the rotor (13) is a bell-shaped rotor, wherein the bell-shaped rotor (13) is connected to the shaft (14), wherein the bell-shaped rotor (13) is mounted via the shaft (14).

3. Electric machine (1) according to claim 2,
**characterised in that** the bell-shaped rotor (13) has an inner shaft (16).

4. Electric machine according to one of claims 1 to 3, wherein the housing has fastening elements (4), in particular four,
wherein the housing braces (26, 27) attach to the fastening elements (24) and embody a V-shape in each case.

## Revendications

1. Machine (1) électrique comprenant
- un stator (2) extérieur,
- un stator (5) intérieur, qui est disposé, concentriquement au stator (2) extérieur, à l'intérieur du stator (2) extérieur,
- un rotor (13), qui est disposé, concentriquement au stator (2) extérieur et au stator (5) intérieur, entre le stator (2) extérieur et le stator (5) intérieur et qui peut être déplacé par rapport au stator (2) extérieur et au stator (5) intérieur, et
- un arbre (14),
- un premier dispositif (29) de refroidissement pour refroidir le stator (5) intérieur,
- un deuxième dispositif (31) de refroidissement pour refroidir le stator (2) extérieur,
dans laquelle le deuxième dispositif (31) de refroidissement a un conduit (30) spiralé, dans laquelle le deuxième dispositif (31) de refroidissement a une forme bifilaire,
dans laquelle le stator (2) extérieur a une enveloppe (8) extérieure et le stator (5) intérieur a une enveloppe (10) intérieure, dans laquelle l'enveloppe (8) extérieure et l'enveloppe (10) intérieure forment conjointement une enveloppe en forme de pot,
**caractérisée**
**en ce que** le premier dispositif (29) de refroidissement est relié au deuxième dispositif (31) de refroidissement, dans laquelle le premier dispositif (29) de refroidissement et le deuxième dispositif (31) de refroidissement ont une entrée (34) commune et/ou une sortie (35) commune,
**en ce que** le premier dispositif (29) de refroidissement a un conduit (32) de refroidissement spiralé, dans laquelle le premier dispositif (29) de refroidissement a une forme bifilaire et l'enveloppe (12) en forme de pot est réalisée en une seule pièce, dans laquelle des renforts (26, 27) de l'enveloppe sont prévus pour le renforcement de l'enveloppe (12).

2. Machine (1) électrique suivant la revendication 1, **caractérisée en ce que** le rotor (13) est un rotor en cloche, dans laquelle le rotor (13) en cloche est relié à l'arbre (14), dans laquelle le rotor (13) en cloche est monté par l'arbre (14).

3. Machine (1) électrique suivant la revendication 2, **caractérisée en ce que** le rotor (13) en cloche a un arbre (16) intérieur.

4. Machine (1) électrique suivant l'une des revendications 1 à 3,
dans laquelle l'enveloppe a des éléments (24) de fixation, notamment quatre éléments (24) de fixation,
dans laquelle les renforts (26, 27) de l'enveloppe sont mis sur les éléments (24) de fixation et forment respectivement un V.
